# EUROPEAN PATENT APPLICATION

(11) **EP 4 226 994 A1**
(43) Date of publication of application: **16.08.2023**
(21) Application number: 22865918.1
(22) Date of filing: 01.06.2022
(51) Int. Cl.: B01D 71/36, B01D 69/12, B01D 69/02, B01D 67/00

(54) **PREPARATION METHOD FOR ANTIBACTERIAL AND ANTI-VIRUS AIR PURIFICATION MATERIAL**

(30) Priority: 29.12.2021 CN 202111640536
(71) Applicant: Jiangsu Jiulang High-Tech Co., Ltd., Jiangsu 211800 (CN)
(72) Inventor: ZHONG, Zhaoxiang, Nanjing, Jiangsu 211800 (CN); WU, Junwei, Nanjing, Jiangsu 211800 (CN); ZHOU, Hongjia, Nanjing, Jiangsu 211800 (CN); ZHOU, Qun, Nanjing, Jiangsu 211800 (CN); FENG, Shasha, Nanjing, Jiangsu 211800 (CN); XING, Weihong, Nanjing, Jiangsu 211800 (CN)
(74) Representative: Gong, Jinping
(86) International application number: PCT/CN2022/096536
(87) International publication number: WO 2023/123862

(57) **Abstract**

The present invention discloses a method for preparing antibacterial and anti-virus air-purifying materials, in which surfactant and buffer solution are used to increase the dispersion and stability of carbon nanotubes, and multi-layer structure is constructed on the surface of PTFE fibers to increase the contact area with pollutants and improve the surface roughness, and improve the loading rate and loading fastness of antibacterial agent in the later stage. The organic antibacterial agent is loaded onto the carbon nanotubes and the PTFE fibers through a simple and rapid hydrothermal reaction. After baking and drying, the antibacterial and antivirus membrane material are laminated on the substrate by high-temperature hot-pressing. The overall strength of antibacterial and antivirus air-purifying material is improved on the premise of not reducing air permeability and antibacterial effect, so as to ensure the long-term stable use of the material.

## Description

### Technical Field

The present invention belongs to the air-purifying technical field, in particular to a method for preparing an antibacterial and antivirus air-purifying material.

### Background Art

With the frequent outbreaks of infectious diseases, such as avian influenza, influenza A (H1N1) and influenza, people are deeply aware of the enormous dangers hidden by pathogenic microorganisms such as bacteria and viruses, which are insignificant in daily life. In recent years, the research focus of protective materials has been changed from a single model of intercepting fine particles to a collaborative model of killing bacteria and viruses while intercepting particles. At present, the method of preparing antibacterial materials to synthesize metal ions or metal oxides with antibacterial function onto the carrier by atomic layer deposition or plasma grafting, so that the antibacterial effect can be prolonged by the stronger chemical-bond energy. However, this method is not suitable for large-scale promotion and application due to the cumbersome procedure. In addition, the porous PTFE membrane material has excellent chemical and thermal stability, which makes the surface adhesion of the porous PTFE membrane material with other materials more difficult. Therefore, it is necessary to select appropriate reaction precursors to provide sufficient surface activation energy to improve the atomic layer deposition effect. Alternatively, organic substances such as metal ions, polyphenols, and organic acids are doped on the surface of the fibers by electrospinning technology, but the uncertainty of electrospinning parameters will affect the structure and morphology of nanofibers, has and have a great impact on the antibacterial properties of fibers. In addition, the strength and the production efficiency of electrospun nanofibers are low, which limits the industrial production of fibers. In addition, the mechanical properties of porous PTFE membrane materials, such as tensile resistance, are relatively poor. No matter what method is used for modification, support materials must be used in practical applications to improve the mechanical strength and increase the service life.

### Summary of the Invention

In view of the current problems of cumbersome preparation methods of antibacterial materials, low loading rate of antibacterial factors, and low fastness, the present invention discloses an antibacterial and antivirus air-purifying material, which has the advantages of simple process strong continuous production capacity and large-scale production prospects. The antibacterial and antivirus air-purifying material prepared by this method has high permeability, good antibacterial performance, and long service life.

The technical solution of the present invention is as follows:
A method for preparing an antibacterial and antivirus air-purifying material comprises the following steps:
step 1: Mix carbon nanotubes and ethanol aqueous solution in a certain proportion, add surfactant after ultrasonic treatment, and then add buffer solution under magnetic stirring to obtain carbon nanotube dispersion.
step 2: Immerse the porous PTFE (polytetrafluoroethylene) membrane material in the ethanol solution, take out the material, and then place the material in the mixed solution of surfactant and buffer solution, and then rinse the material with deionized water and dry it naturally.
step 3: The carbon nanotube dispersion obtained in step 1 is loaded onto the processed porous PTFE material by suction filtration, and the multi-layer PTFE membrane material is obtained through drying.
step 4: Add the organic antibacterial agent to the deionized water to prepare the antibacterial solution, adjust the pH value to increase the solubility of the antibacterial agent, then conduct uniform magnetic stirring, immerse the multi-layer PTFE membrane material into the antibacterial solution, and bake and dry after hydrothermal reaction.
step 5: The PTFE membrane material loaded with antimicrobial agent is laminated onto the substrate by high-temperature hot-pressing method, and the high-temperature laminating process was regulated by heating temperature, pressure, and laminating speed of the laminating roller, and the composite membrane was wound after completion.

In a further step 1, the mass fraction of ethanol solution is 25%, 50%, and 75%, the surfactant is dopamine, sodium dodecyl sulfate, sodium dodecyl benzene sulfonate, and dodecyl polyoxyethylene ether, and the buffer solution is tris (hydroxymethyl) aminomethane aqueous solution, sodium tetraborate aqueous solution and mixed phosphate saline solution.

In a further step 1, the mass of carbon nanotubes accounts for 20-30% of the mixed solution, the ultrasonic time is 0.5-2 h, the mass ratio of carbon nanotubes to the surfactant is 1: 1-4, and the volume ratio of buffer solution to carbon nanotube aqueous solution is 1: 3-5.

In a further step 2, the surfactant and buffer solution in the mixed solution have the same concentration and volume, the concentration range of the surfactant solution and buffer solution is 10to 30 mM. The porous PTFE material is washed with deionized water for 3-6 times and soaked for 5-20 min.

In a further step 3, the suction filtration pressure of the vacuum pump is 0.04-0.098 MPa, the drying temperature is 100-200 °C, and the drying time is 12-24 h.

In a further step 4, the antibacterial agent is organic antibacterial agents such as diketones, polyphenols, and chitosan, the mass of antibacterial agent accounts for 5-20% of the mixed solution, the pH regulator is hydrochloric acid and acetic acid, sodium hydroxide and sodium bicarbonate, the magnetic stirring time is 0.5-1 h, the hydrothermal temperature is 60-120 °C, the hydrothermal time is 0.5-5 h, the drying temperature is 80-100 °C, and the drying time is 1-4 h. In a further step 5, the high-temperature hot-pressing method is conducted by passing the membrane material and the substrate through a laminating roller sequentially, and passing the laminated fabric through a pulling roller to complete winding.

In a further step 5, the laminating roller and the pulling roller are made of stainless steel.

In a further step 5, the substrate is made of polyester, polyethylene, and glass fiber cloth, the laminating temperature is 100-400 °C, the laminating pressure is 0.1-0.5 MPa, and the laminating speed is 2-5 m/min.

The beneficial effects are as follows: The present invention discloses a method for preparing antibacterial and antivirus air-purifying material, wherein surfactant and buffer solution are used to improve the dispersion and stability of carbon nanotubes, and multi-layer structure is constructed on the surface of PTFE fibers, so as to increase the contact area with pollutants and improve the surface roughness, and improve the loading rate and load fastness of antibacterial agent in the later stage. The organic antibacterial agent is loaded onto the carbon nanotubes and the PTFE fibers through a simple and rapid hydrothermal reaction. After baking and drying, the antibacterial and antivirus membrane material are laminated on the substrate by high-temperature hot-pressing. The overall strength of antibacterial and antivirus air-purifying material is increased on the premise of not reducing air permeability and antibacterial effect, so as to ensure the long-term stable use of the material.

### Brief Description of the Drawings

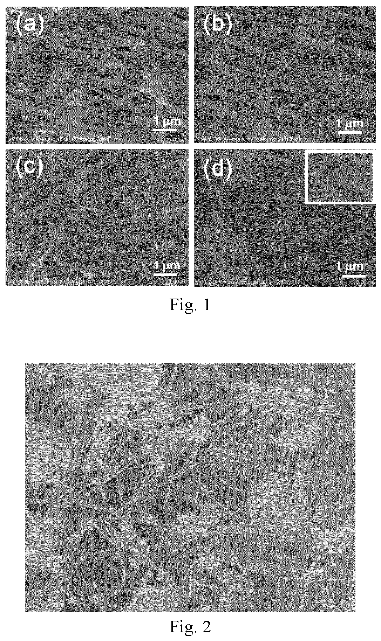

FIG. 1 is a SEM plot of carbon nanotube loading on the surface of PTFE membranes according to the present invention. (a) 1.4 g/m², (b) 2.8 g/m², (c) 4.2 g/m², (d) 5.6 g/m².
FIG. 2 is a SEM plot of a membrane material of the present invention after lamination with a substrate.

### Detailed Description of the Invention

### Example 1

A method for preparing an antibacterial and antivirus air-purifying material comprises the following steps:
step 1: 10 mg of carbon nanotubes were added into 30 mL of 75% ethanol aqueous solution for mixing, and the mixture was treated with ultrasound for 1 h. 40 mg of dopamine was added under magnetic stirring, followed by stirring uniformly for 5 min. 10 mL of 10 mM tris (hydroxymethyl) aminomethane aqueous solution was added, and the mixture was stirred for 10 min to obtain a uniform carbon nanotube dispersion.
step 2: The porous PTFE membrane material was immersed in a 75% ethanol solution, then taken out, and placed in a mixed solution of 10 mL of 10 mM dopamine solution and 10 mL of 10 mM tris (hydroxymethyl) aminomethane aqueous solution, soaked for 10 min, then rinsed with deionized water for 3 times, and dried naturally.
step 3: The carbon nanotube dispersion obtained in step 1 was loaded onto the processed porous PTFE material by suction filtration under a suction filtration pressure of 0.06 MPa, and dried at 100°C for 12 h to obtain a multi-layer PTFE membrane material.
step 4: Curcumin was added to deionized water to prepare antibacterial solution. Sodium hydroxide was used to adjust a pH value of 9, magnetic stirring was performed for 1 h, and then the multi-layer PTFE membrane material was immersed in the antibacterial solution, the hydrothermal reaction was performed at 80°C for 2 h, followed by baking and drying at 80°C for 1 h.
step 5: The PTFE membrane material loaded with antibacterial factor was laminated with a polyvinyl substrate by a high-temperature hot-pressing method at 110°C with a laminating pressure of 0.2 MPa and a laminating speed of 2 m/min, and the composite membrane was wound after completion.

The antibacterial and antivirus air-purifying material prepared in this example had an inhibition rate of more than 95% on Escherichia coli and more than 95%on Staphylococcus aureus. The antibacterial effect remained unchanged after 60 days of use.

### Example 2

A method for preparing an antibacterial and anti-virus air-purifying material comprises the following steps:
step 1: 15 mg of carbon nanotubes were added into 35 mL of 50% ethanol aqueous solution for mixing, and the mixture was treated with ultrasound for 1 h. 45 mg of sodium dodecyl sulfate was added under magnetic stirring, followed by stirring uniformly for 15 min. 20 mL of 10 mM tris (hydroxymethyl) aminomethane aqueous solution was added, and the mixture was stirred for 20 min to obtain a uniform carbon nanotube dispersion.
step 2: The porous PTFE membrane material was immersed in a 50% ethanol solution, then taken out, and placed in a mixed solution of 20 mL of 10 mM sodium dodecyl sulfate solution and 20 mL of 10 mM tris (hydroxymethyl) aminomethane aqueous solution, soaked for 20min, then rinsed with deionized water for 4 times, and dried naturally,
step 3: The carbon nanotube dispersion obtained in step 1 was loaded onto the processed porous PTFE material by suction filtration under a suction filtration pressure of 0.08 MPa, and dried at 100°C for 12 h to obtain a multi-layer PTFE membrane material.
step 4: Tea polyphenol was added to deionized water to prepare antibacterial solution. Hydrochloric acid was used to adjust a pH value of 3, magnetic stirring was performed for 1 h, and then the multi-layer PTFE membrane material was immersed in the antibacterial solution, the hydrothermal reaction was performed at 100°C for 2 h, followed by baking and drying at 80°C for 1 h.
step 5: The PTFE membrane material loaded with antibacterial factor was laminated with a polyester substrate by a high-temperature hot-pressing method at 250°C with a laminating pressure of 0.2 MPa and a laminating speed of 3 m/min, and the composite membrane was wound after completion.

The antibacterial and antivirus air-purifying material prepared in this example had an inhibition rate of more than 95% on Escherichia coli and more than 95% on Staphylococcus aureus. The antibacterial effect remained unchanged after 45 days of use.

### Example 3

A method for preparing an antibacterial and anti-virus air-purifying material comprises the following steps:
step 1: 15 mg of carbon nanotubes were added into 45 mL of 25% ethanol aqueous solution for mixing, and the mixture was treated with ultrasound for 2 h. 30 mg of sodium dodecyl benzene sulfonate was added under magnetic stirring, followed by stirring uniformly for 20 min. 20 mL of 20 mM phosphate aqueous solution was added, and the mixture was stirred for 20 min to obtain a uniform carbon nanotube dispersion.
step 2: The porous PTFE membrane material was immersed in a 25% ethanol solution, then taken out, and placed in a mixed solution of 20 mL of 20 mM sodium dodecyl benzene sulfonate solution and 20 mL of 20 mM phosphate aqueous solution, soaked for 20 min, then rinsed with deionized water for 5 times, and dried naturally.
step 3: The carbon nanotube dispersion obtained in step 1 was loaded onto the processed porous PTFE material by suction filtration under a suction filtration pressure of 0.09 MPa, and dried at 100°C for 24 h to obtain a multi-layer PTFE membrane material.
step 4: Chitosan was added to deionized water to prepare antibacterial solution. Acetic acid was used to adjust a pH of 3, magnetic stirring was performed for 1 h, and then the multi-layer PTFE membrane material was immersed in the antibacterial solution, the hydrothermal reaction was performed at 60°C for 3 h, followed by baking and drying at 80°C for 2 h.
step 5: The PTFE membrane material loaded with antibacterial factor was laminated with a polyester substrate by a high-temperature hot-pressing method at 250°C with a laminating pressure of 0.3 MPa and a laminating speed of 3 m/min, and the composite membrane was wound after completion.

The antibacterial and antivirus air-purifying material prepared in this example had an inhibition rate of more than 95% on Escherichia coli and more than 95% on Staphylococcus aureus. The antibacterial effect remained unchanged after 30 days of use.

## Claims

1. A method for preparing an antibacterial and antivirus air-purifying material, **characterized by** comprising the following steps:
step 1: Mix carbon nanotubes and ethanol aqueous solution in a certain proportion, add surfactant after ultrasonic treatment, and then add buffer solution under magnetic stirring to obtain carbon nanotube dispersion;
step 2: Immerse the porous PTFE (polytetrafluoroethylene) membrane material in the ethanol aqueous solution, take out the material, and then place the material in the mixed solution of surfactant and buffer solution, and then rinse the material with deionized water and dry it naturally;
step 3: The carbon nanotube dispersion obtained in step 1 is loaded onto the processed porous PTFE material by suction filtration, and the multi-layer PTFE membrane material is obtained through drying;
step 4: Add the organic antibacterial agent to deionized water to prepare the antibacterial solution, adjust the pH value to increase the solubility of the antibacterial agent, then conduct uniform magnetic stirring, immerse the multi-layer PTFE membrane material into the antibacterial solution, and bake and dry after hydrothermal reaction;
step 5: The PTFE membrane material obtained in step 4 is aminated onto the substrate by high-temperature hot-pressing method, and the high-temperature laminating process was regulated by heating temperature, pressure, and laminating speed of the laminating roller, and the composite membrane was wound after completion.

2. The method for preparing an antibacterial and antivirus air-purifying material according to claim 1, **characterized in that** the mass fraction of ethanol solution is 25%, 50%, and 75%, the surfactant is dopamine, sodium dodecyl sulfate, sodium dodecyl benzene sulfonate, and dodecyl polyoxyethylene ether, and the buffer solution is tris (hydroxymethyl) aminomethane aqueous solution, sodium tetraborate aqueous solution, and mixed phosphate aqueous solution.

3. The method for preparing an antibacterial and antivirus air-purifying material according to claim 1, **characterized in that** the mass of carbon nanotube accounts for 20-30% of the mixed solution, the ultrasonic time is 0.5-2 h, the mass ratio of carbon nanotubes to the surfactant is 1: 1-4, and the volume ratio of the buffer solution to carbon nanotubes aqueous solution is 1: 3-5.

4. The method for preparing the antibacterial and antivirus air-purifying material according to claim 1, **characterized in that** the surfactant and the buffer solution in the mixed solution in step 2 have the same concentration and volume, the concentration range of the surfactant solution and the buffer solution is10 to 30 mM; The porous PTFE material is washed with deionized water for 3-6 times and soaked for 5-20 min.

5. The method for preparing the antibacterial and antivirus air-purifying material according to claim 1, **characterized in that** the suction filtration pressure of the vacuum pump in step 3 is 0.04-0.098 MPa, the drying temperature is 100-200°C, and the drying time is 12-24 h.

6. The method for preparing an antibacterial and antivirus air-purifying material according to claim 1, **characterized in that** the antibacterial agent in step 4 is organic antibacterial agents such as diketones, polyphenols, and chitosan, the mass of antibacterial agent accounts for 5-20% of the mixed solution, the pH regulator is hydrochloric acid and acetic acid, sodium hydroxide and sodium bicarbonate, the magnetic stirring time is 0.5-1 h, the hydrothermal temperature is 60-120°C, the hydrothermal time is 0.5-5 h, the drying temperature is 80-100°C, and the drying time is 1-4 h.

7. The method for preparing an antibacterial and antivirus air-purifying material according to claim 1, **characterized in that** the high-temperature hot-pressing method in step 5 is conducted by passing the membrane material and the substrate through a laminating roller sequentially, and passing the laminated fabric through a pulling roller to complete winding.

8. The method for preparing an antibacterial and antivirus air-purifying material according to claim 1, **characterized in that** the laminating roller and the pulling roller in step 5 are made of stainless steel.

9. The method for preparing the antibacterial and antivirus air-purifying material according to claim 1, **characterized in that** the substrate in step 5 is made of polyester, polyethylene, and glass fiber cloth, the laminating temperature is 100-400 °C, the laminating pressure is 0.1-0.5 MPa, and the laminating speed is 2-5 m/min.

10. The membrane material prepared by the method for preparing the antibacterial and antivirus air-purifying material according to any one of claims 1 to 9 is **characterized in that** the antibacterial and antivirus air-purifying material is used in the fields of personal protection and indoor purification.
